# EUROPÄISCHE PATENTSCHRIFT

(11) **EP 1 601 257 B1**
(45) Veröffentlichungstag und Bekanntmachung des Hinweises auf die Patenterteilung: **31.12.2008**
(21) Anmeldenummer: 03815523.0
(22) Anmeldetag: 10.12.2003
(51) Int. Cl.: A23L 1/317

(54) **VERFAHREN ZUR HERSTELLUNG VON ROHWURST MIT BESCHLEUNIGTEM REIFEPROZESS**
METHOD FOR THE PRODUCTION OF RAW SAUSAGE, COMPRISING AN ACCELERATED MATURING PROCESS
PROCEDE DE PRODUCTION DE SAUCISSES CRUES PAR UN PROCESSUS DE MATURATION ACCELERE

(30) Priorität: 16.01.2003 DE 10301354
(43) Veröffentlichungstag der Anmeldung: 07.12.2005
(73) Patentinhaber: Zylum Beteiligungsgesellschaft mbH & Co. Patente II KG, 12529 Schönefeld / Waltersdorf (DE)
(72) Erfinder: SEEWALD, Marcus, J., 06420 Pfitzdorf (DE)
(74) Vertreter: Zech, Stefan Markus
(86) Internationale Anmeldenummer: PCT/DE2003/004076
(87) Internationale Veröffentlichungsnummer: WO 2004/066755

(56) Entgegenhaltungen:
- EP-A- 0 130 228
- EP-A- 0 572 305
- EP-A- 0 641 857
- EP-A- 1 048 227
- WO-A-01/28365
- US-A- 5 888 563

## Beschreibung

Die Erfindung betrifft ein Verfahren zur Herstellung von Rohwurst mit beschleunigtem Reifeprozess.

Die Wesenszüge in unserer Ernährungskultur sind gefestigt und der Verzehr von Wurstwaren mehrmals in der Woche ist darin ein grundlegender Bestandteil. Der ungenügende Verzehr von frischem Obst und grünem Gemüse und die Zunahme der Außer- Haus- Verpflegung bei gleichzeitiger energetischer Überversorgung kennzeichnen das gewohnheitsmäßige Verhalten der Endverbraucher bei der Lebensmittelauswahl.

Diese Feststellung diente bereits vielfältig als Ansatzpunkt, um nach möglichst praxisnahen Lösungswegen zu suchen, die den Wünschen der Endverbraucher auch beim Verzehr von Wurstwaren entgegen kommen.

So zeigt beispielsweise die DE 20112829 U1 Lösungswege zu cholesterin- und purinreduzierten Wurstwaren. Diese Erfindung offenbart bevorzugte fettreduzierte Fleischarten zur Wurstproduktion, um dafür Pflanzenfette einzusetzen.

Die DE 4230434 C1 zeigt eine Dauerwurst, die durch einen Zusatz von pulverisiertem Weichkäse ein feines Aroma, eine gute Haltbarkeit und eine hohe optische Akzeptanz erreicht. Die DE19641633 C1 weist ein Verfahren zur Herstellung von Rohwürsten auf, indem durch Zusatz von Milchsäure eine bessere Streichfähigkeit und Farbstabilität erzielt wird.

Insgesamt zeigen diese drei erfinderischen Lösungswege ausschließlich Verfeinerungen der Produktqualität, die jedoch gesundheitlichen Aspekten wenig oder keine Beachtung schenken.

Auch gibt es erfinderische Ideen zur Vitaminisierung von aus Fleisch und Fett produzierten Nahrungsmitteln.

So verweist die WO 90/09108 A1 auf kleinste künstliche poröse Strukturen bzw. "porous polymeric beads", die in Lebensmitteln eingebracht sind in denen sich zugeführte Vitamine einlagern und so geschützt werden. Diese künstlichen kleinsten Strukturen sind nach Vitaminaufnahme mit sogenannten wasserlöslichen coatings überzogen die sich erst bei Hitze auflösen.

Weiter zeigt die DE 10047515 A1 ein vitaminisiertes Fleischprodukt, das durch einen Poltervorgang von Fleisch mit in einer Flüssigkeit gelösten Vitaminmischung eine inkontaktgeratene Vitaminisierung erhält. Die EP 1048227 B1 offenbart Fleischprodukte mit ergänzenden Omega-3-Fett-Säuren, Vitaminen und Ballaststoffen, die auf eine gesunde Ernährung abzielen, um damit die Endverbraucher zu erreichen, die ihre gewohnte Ernährung nicht ändern wollen.

Diese drei erfinderischen Lösungen zeigen vorrangig Ideen zur Vitaminisierung nach dem "Schrotschussprinzip", um damit einen höheren Gesundheitswert zu erreichen. Anregungen natürlicher biologischer Prozesse in herzustellenden Fleischprodukten fehlen völlig.

Aufgabe der Erfindung ist es, die Nachteile dieser erfinderischen Lösungen zu überwinden.

Erfindungsgemäß wird die Aufgabe mit einem Verfahren zur Herstellung von Rohwurst mit beschleunigtem Reifeprozess auf Basis bekannter Rezepturen und Leitsätzen typischer Rohwurstsorten nach den Ansprüchen 1 bis 4 gelöst.

Bei der Herstellung von Rohwurst gibt es keine Arbeitsschritte, die auf Hitzeeinwirkung beruhen, wie beispielsweise bei der Brühwurst oder Kochwurst. Ein Erhitzen hätte die Abtötung von Mikroorganismen zur Folge.

Zur erfindungsgemäßen Rohwurstherstellung wird im Kutter nach der Zerkleinerung von Magerfleisch Folsäure und/ oder Folate vorzugsweise im Arbeitsschritt der Gewürzzugabe unter Beachtung einer gleichmäßigen Verteilung eingegeben. Nach anschließender Zugabe und Zerkleinerung von Speck erfolgt die Vermengung mit Nitritpökelsalz, damit unter anderem diese Rohwurstmasse bzw. dieses Brät in einem Zeitabschnitt von ca. 20 min die entsprechende Bindung entwickelt. Nach darauffolgender Abfüllung in Naturwursthüllen beginnen die eigentlichen biochemischen Reifungsprozesse. Die abgefüllte Rohwurst wird bei einer Temperatur von ca. 16°C und bei ca. 90 % Luftfeuchte gelagert und nach ca. 24 Stunden erfolgt eine Veränderung der Temperatur auf ca. 23°C mit ca. 73 % Luftfeuchte. In dieses Zeitfenster fällt der Reifungsbeginn. Die Mikroorganismen vermehren sich. Diese mikrobiologische Reifung verursacht die Aktivierung der Milchsäureproduktion. Parallel dazu beginnt die Rohwurst spezifische natürliche Aromastoffe zu entwickeln bzw. zu entfalten, bedingt durch das Wachstum und die damit verbundene Aktivität der Mikroorganismenanzahl. Durch die Folsäureanreicherung entfällt die Limitierung dieses Wachstumsfaktors Folsäure, der nur in sehr geringen Mengen in den Ausgangsmaterialien der Rohwurstmasse festzustellen ist.

Bei wiederholten Versuchen ergaben sich reproduzierbare positive Effekte wie
- signifikante Verbesserung von Geschmack und Geruch.
- schnellere Reifung
- Vereinfachung und bessere Standardisierung des Reifungsprozesses
- extrem gute Lagereigenschaften
- Verbesserung der Produkteigenschaften wie beispielsweise bessere Schnittfestigkeit und gleichmäßige Farbentwicklung
- Verminderung der Gefahr von Fehlproduktionen

Diese Effekte, die nur durch reine Anregung der natürlichen Reifeprozesse durch Zugabe von Folsäure und/ oder Folate entstehen, erklären sich durch einen rapiden Anstieg der Mikroorganismenanzahl, gebildet durch Mikrokokken und/ oder Laktobazillen o.ä., die die Milchsäure und spezifische Fermentationsprodukte schneller und besser entstehen lässt als bei normaler Rohwurstherstellung.

Die Folgen sind bei der erfindungsgemäßen Rohwurstherstellung beträchtlich. Es konnte festgestellt werden, dass negative Mikroorganismen am Wachstum gehindert werden durch "Verdrängungseffekte" der positiven Mikroorganismen. Weiterhin zeigte sich eine erhöhte Qualitätsstabilität, weil Schwankungen in der Rohwurstmasse positiv ausgeglichen werden konnten. Bei diesem Ergebnis ist als Folge u.a. eine bessere Standardisierung ermöglicht. Das allgemeine hochsignifikante Ansteigen der Qualität, das sich ebenso äußert in der schnelleren und gleichmäßigen Farbentwicklung, dem schnelleren Erreichen der Schnittfestigkeit und der schnelleren Reifung, ermöglicht eine kostengünstige Technologie, die sich durch die enorm verkürzte Bearbeitungszeit bzw. Lagerzeit auszeichnet und zusätzliche Aufwendungen einspart. Als ökonomisch wertvoll erweist sich bei der erfindungsgemäßen Herstellung die verkürzte Reifezeit und der dadurch verringerte Wasserverlust der Rohwurst. Die Produkte bleiben in Ihrer Wirkung frisch und der zusätzliche Wasserverlust während einer langen Reifezeit ist vermieden. Für den Verbraucher wird eine gesunde und sensorisch bessere Rohwurst geboten.

Der verursachte rapide Anstieg der Mikroorganismenanzahl, der durch Zugabe von Folsäure und/ oder Folate entsteht, zeigt deutlich die gleichen Effekte der Starterkulturen. Es findet hier ebenso eine Vermehrung der vorhandenen Population von Mikroorganismen statt. Jedoch entfällt der typischen "Umkehreffekt", der nach der Reifung mit Starterkulturen erfolgt. Somit ist die charakteristische Lagerfähigkeit für eine natürliche Rohwurst bei gleichbleibender Qualität gewährleistet. Im zweiten Ausführungsbeispiel ist dargelegt, dass die Zugabe von Folsäure Starterkulturen ersetzt.

Bei Rohwurstprodukten wie beispielsweise der Edelschimmelsalami ist eine Edelschimmelbildung gewünscht. Das dritte Ausführungsbeispiel zeigt, dass durch Folsäureanreicherungen eine vorteilhafte Edelschimmelbildung sehr leicht möglich ist. Gegenüber standardisierten Produkten wird die Reifezeit um deutlich mehr als 50% gesenkt.

Folsäure ist zudem mit ihren Eigenschaften ein sehr wichtiger Baustein zur gesundheitlichen Vorbeugung und zur Behandlung von Erkrankungen. Sie wirkt bei allen Zellteilungsprozessen im Körper mit und regeneriert zum Beispiel Epithelien von Magen, Darm und Atmungsorganen und hat protektive Wirkung auf das Herz- Kreislaufsystem. Vor allem beugt sie arteriosklerotischen Veränderungen vor. Eine Überversorgung und die daraus resultierenden gesundheitlichen Probleme sind bei geplantem Mengeneinsatz der Folsäure und/ oder Folate ausgeschlossen.

An nachfolgenden drei Ausführungsbeispielen soll die erfindungsgemäße Lösung näher erläutert werden.

Im **ersten Ausführungsbeispiel** wurden Anreicherungen mit 4mg, 8mg und 10mg Folsäure / kg Rohwurstmasse in der Standard - Cervelatwurst - Grundrezeptur durchgeführt.

| Cervelatwurst - Grundrezeptur | Charge 1 | Charge 2 | Carge 3 |
|---|---|---|---|
| Rindfleisch in % | 20 | 20 | 20 |
| mageres Schweinefleisch in % | 50 | 50 | 50 |
| Speck in % | 30 | 30 | 30 |
| Nitritpökelsalz in g/kg | 28,00 | 28,00 | 28,00 |
| gemahlener schwarzer Pfeffer in g/kg | 2,50 | 2,50 | 2,50 |
| schwarzes Pfefferschrot in g/kg | 1,00 | 1,00 | 1,00 |
| Glukose in g/kg | 6,00 | 6,00 | 6,00 |
| Askorbinsäure in g/kg | 0,20 | 0,20 | 0,20 |
| Starterkultur in g/kg | 0,50 | 0,50 | 0,50 |
| Folsäure in mg/kg | 4 | 8 | 10 |

Insgesamt zeigten sich die mit Folsäure angereicherten Chargen einer Kontrollcervelatwurst ohne Folsäurezugabe weit überlegen.

Nach 24 Stunden zeigten sich Unterschiede in der Reifung zwischen den folsäurehaltigen Chargen. Die Charge mit der Folsäurekonzentration von 10mg / kg Rohwurstmasse zeigte dabei den besten Reifungsprozess und die meisten technologischen Fortschritte. Die Chargen mit 4mg und 8mg Folsäure / kg Rohwurstmasse verhielten sich entsprechend der eingesetzten Folsäuremenge und waren ebenfalls hoch- signifikant von der Kontrollcervelatwurst ohne Folsäure zu unterscheiden. Die Chargen mit Folsäure entwickelten ein positives Rohwurstaroma, hohe Schnittfestigkeit und eine rohwursttypische Farbgebung. Zur Überprüfung dieser Beobachtung während des Reifungsprozesses wurden wiederholt standardisierte wissenschaftlich allgemein übliche sensorische Prüfungen 14, 21 und 28 Tage nach der Produktion durchgeführt.

10 geschulte Prüfer bildeten die Testgruppe; die zu prüfenden Produkte wurden anonym eingesetzt.

Das Ergebnis der sensorischen Prüfung belegt hoch- signifikant und eindeutig die Überlegenheit des folsäurehaltigen Produkts mit 10mg Folsäure / kg Rohwurstmasse, gegenüber anderen Chargen in bezug auf die Charakteristika Geschmack und Geruch.

Lagerversuche über 8 Wochen zeigten die Beständigkeit dieser positiven Eigenschaften mit großer Überlegenheit gegenüber standardisierter Cervelatwurst ohne Folsäurezugabe.

Der Einsatz von 10mg Folsäure / kg Rohwurstmasse, der sich als optimal herausgestellt hat, macht zudem physiologisch noch einen größeren Sinn. Denn bei einem erfahrungsgemäßen Folsäureverlust von ca. 30 - 40% bei der Wurstproduktion, verbleiben noch 6 - 7 mg Folsäure pro kg Rohwurstmasse im Produkt und man kommt beim Verzehr von 50 - 100g Rohwurst sehr gut in den Bereich der täglichen Aufnahmeempfehlung.

Im **zweiten Ausführungsbeispiel** wurden Anreicherungsversuche mit Folsäure mit dem selben Grundrezept der Standard - Cervelatwurst durchgeführt jedoch ohne den Einsatz von Starterkulturen.

| Cervelatwurst - Grundrezeptur | Charge 1 | Charge 2 | Carge 3 |
|---|---|---|---|
| Rindfleisch in % | 20 | 20 | 20 |
| mageres Schweinefleisch in % | 50 | 50 | 50 |
| Speck in % | 30 | 30 | 30 |
| Nitritpökelsalz in g/kg | 28,00 | 28,00 | 28,00 |
| gemahlener schwarzer Pfeffer in g/kg | 2,50 | 2,50 | 2,50 |
| schwarzes Pfefferschrot in g/kg | 1,00 | 1,00 | 1,00 |
| Glukose in g/kg | 6,00 | 6,00 | 6,00 |
| Askorbinsäure in g/kg | 0,20 | 0,20 | 0,20 |
| Starterkultur | - | - | - |
| Folsäure in mg/kg | 4 | 8 | 10 |

Das Ergebnis dieser Ansätze weist daraufhin, daß die Zugaben von 4 - 8mg/kg Folsäure die Anwendung von Starterkulturen unterstützt. Die Charge mit 10mg / kg Rohwurstmasse ersetzt die Starterkultur von ca. 0,50 g / kg Rohwurstmasse. (0,5g Starterkultur / kg Rohwurstmasse ist ein standardmäßiger Einsatz einer kommerziell erhältlichen Starterkultur).

Im **dritten Ausführungsbeispiel** wurden beim Verfahren zur Herstellung von Edelschimmelsalami 8mg Folsäure / kg Rohwurstmasse zugegeben. Die Herstellung erfolgte nach den standardisierten Rezepturen und Leitsätzen zur Produktion.

| Edelschimmelsalami - Grundrezeptur | Charge von 40kg |
|---|---|
| Rindfleisch in kg | 8 |
| mageres Schweinefleisch in kg | 24 |
| Speck in kg | 8 |
| Nitritpökelsalz in g | 840 |
| gemahlener schwarzer Pfeffer in g | 90 |
| schwarzes Pfefferschrot in g | 30 |
| Askorbinsäure 80% ig in g | 15 |
| Starterkultur | - |
| Folsäure in mg/kg | 8 |

Zur Herstellung von Edelschimmelsalami wurde das ca. - 4°C kalte Rind- und Schweinefleisch im Kutter sehr feinkörnig zerkleinert. Im folgenden Arbeitsschritt wurde neben der Gewürzmischung 8mg Folsäure / kg Rohwurstmasse zugegeben. Nach der anschließenden Zugabe und Zerkleinerung von Speck erfolgt die Vermengung mit Nitritpökelsalz, damit unter anderem diese Rohwurstmasse bzw. dieses Brät die entsprechende Bindung entwickelt.

Nach darauffolgender Abfüllung in Naturwursthüllen wurden die Rohwürste im handwarmen Salzwasser abgewaschen und auf Räucherstäbe gehangen.

Käuflich erworbene Edelschimmelkulturen wurden darauffolgend nach Vorschrift in Trinkwasser gelöst und anschließend mittels Sprühverfahren auf die Salamioberflächen unter Beachtung einer gleichmäßigen Verteilung aufgebracht.

Nun wurden die so behandelten Edelschimmelsalami bei einer Luftfeuchte von ca. 93% und ca. 23°C Raumtemperatur 3 Tage gelagert. Nach ca. 2 Tagen war der Schimmelrasen angewachsen und nach ca. 3 Tagen sichtbar. Anschließend wurde die relative Luftfeuchte auf ca. 88% und die Temperatur auf ca. 22°C gesenkt. Diese Einstellung im Reiferaum wurde 2 Tage lang aufrecht erhalten. Danach wurde die relative Luftfeuchte auf ca. 74% bei einer Temperatur von ca. 13°C gehalten. Die Edelschimmelsalami reift unter diesen Bedingungen aus. In diesem Stadium wächst ein Schimmelrasen nicht mehr, trägt aber noch zur Entwicklung der typischen Aromastoffe bei.

Die Edelschimmelsalami unter Verwendung von Folsäure und/ oder Folate benötigt für die letzte Reifungsphase die Zeitdauer von ca. 21 Tagen und ist dann verkaufsfertig. Dem gegenüber beansprucht eine standardgemäß hergestellten Edelschimmelsalami ohne Folsäure bis zu 90 Tage Reifezeit.

## Patentansprüche

1. Verfahren zur Herstellung von Rohwurst mit beschleunigtem Reifeprozess, auf Basis bekannter Rezepturen und Leitsätzen typischer Rohwurstsorten,
**dadurch gekennzeichnet,**
**dass** Folsäure und/oder Folate unter Beachtung einer gleichmäßigen Verteilung so zugegeben wird, dass auf Grundlage natürlicher Prozesse der Rohwurstproduktion ein rapider Anstieg der vorhandenen Population der Mikroorganismenanzahl von Milchsäure bildenden Mikrokokken und/oder Laktobazillen stattfindet.

2. Verfahren nach Anspruch 1,
**dadurch gekennzeichnet,**
**dass** zwischen 4 mg und 25 mg Folsäure und/oder Folate/kg Rohwurstmasse, bevorzugt 10 mg Folsäure und/oder Folate/kg Rohwurstmasse, unter Beachtung einer gleichmäßigen Verteilung zugegeben wird.

3. Verfahren nach den Ansprüchen 1 und 2,
**dadurch gekennzeichnet,**
**dass** Folsäure und/oder Folate im Arbeitsschritt der Gewürzzugabe unter Beachtung einer gleichmäßigen Verteilung zugegeben wird.

4. Verfahren nach mindestens einem der vorhergehenden Ansprüche,
**dadurch gekennzeichnet,**
**dass** keine Starterkulturen in den Prozeß zugegeben werden.

## Claims

1. A method of manufacturing raw sausage with an accelerated ripening process on the basis of known recipes and guiding principles on typical raw sausage types,
**characterized in that**
folic acid and/or folates is/are added with consideration of a uniform distribution such that on the basis of natural processes of raw sausage production a rapid increase of the existing population of the number of microorganisms of micrococcaceae and/or lactobacilli forming lactic acid takes place.

2. The method according to claim 1,
**characterized in that**
of between 4 mg and 25 mg of folic acid and/or folates/kg of raw sausage mixture, preferably 10 mg folic acid and/or folates/kg of raw sausage mixture are added with consideration of a uniform distribution.

3. The method according to claims 1 and 2,
**characterized in that**
folic acid and/or folates is/are added in the processing step of spice addition with consideration of a uniform distribution.

4. The method of at least one of the preceding claims,
**characterized in that**
no starter cultures are added to the process.

## Revendications

1. Procédé de fabrication de charcuterie crue à processus de maturation accéléré, sur la base de recettes et de principes directeurs connus de sortes typiques de charcuterie crue,
**caractérisé en ce que**
de l'acide folique et/ou du folate est/sont ajouté/s en tenant compte d'une répartition homogène de telle sorte qu'il se produise, sur la base de processus naturels de production de charcuterie crue, une hausse rapide de la population existante du nombre de micro-organismes de microcoques et/ou lactobacilles sécréteurs d'acide lactique.

2. Procédé selon la revendication 1,
**caractérisé en ce que**
entre 4 mg et 25 mg d'acide folique et/ou de folate/kg de la masse de charcuterie crue, de préférence 10 mg d'acide folique et/ou de folate/kg de la masse de charcuterie crue, sont ajoutés en tenant compte d'une répartition homogène.

3. Procédé selon les revendications 1 et 2,
**caractérisé en ce que**
de l'acide folique et/ou du folate est/sont ajouté/s lors de l'étape d'assaisonnement, en tenant compte d'une répartition homogène.

4. Procédé selon au moins l'une des revendications précédentes,
**caractérisé en ce que**
aucune culture starter n'est ajoutée au processus.
